Europäisches Patentamt

European Patent Office

Office européen des brevets

(19)

(11) **EP 0 616 061 B1**

(12)

# EUROPÄISCHE PATENTSCHRIFT

(45) Veröffentlichungstag und Bekanntmachung des Hinweises auf die Patenterteilung:
**30.07.1997 Patentblatt 1997/31**

(51) Int Cl.$^6$: **D03D 1/02**, B60R 21/16

(21) Anmeldenummer: **94103666.7**

(22) Anmeldetag: **10.03.1994**

(54) **Airbag und Gewebe für dessen Herstellung**

Airbag and fabric for its manufacture

Airbag et tissu pour sa fabrication

(84) Benannte Vertragsstaaten:
**BE DE ES FR GB IT NL PT SE**

(30) Priorität: **19.03.1993 DE 4308871**
**12.02.1994 DE 4404487**

(43) Veröffentlichungstag der Anmeldung:
**21.09.1994 Patentblatt 1994/38**

(73) Patentinhaber: **Akzo Nobel N.V.**
**6824 BM Arnhem (NL)**

(72) Erfinder:
• **Krummheuer, Wolf Rüdiger, Dr.**
**D-42119 Wuppertal (DE)**

• **Siejak, Volker**
**D-47259 Duisburg (DE)**
• **Graefe, Hans Albert**
**D-58332 Schwelm (DE)**

(74) Vertreter: **Fett, Günter et al**
**Akzo Patente GmbH,**
**Kasinostrasse 19-21**
**42103 Wuppertal (DE)**

(56) Entgegenhaltungen:
EP-A- 0 442 373          EP-A- 0 501 295
EP-A- 0 509 399          DE-U- 6 938 252
US-A- 4 548 866

**Beschreibung**

Die Erfindung betrifft einen Airbag, bestehend aus mindestens einem Kontaktgewebe und/oder mindestens einem Filtergewebe, wobei das Kontaktgewebe eine Luftdurchlässigkeit < 10 l/dm$^2$·min und das Filtergewebe eine Luftdurchlässigkeit von 20 - 100 l/dm$^2$·min aufweist.

Airbags werden üblicherweise aus hochfesten Geweben hergestellt. Bei diesen Geweben steht besonders die Forderung nach einer gezielt eingestellten Luftdurchlässigkeit im Vordergrund. Allerdings wird häufig ein Airbag nicht nur aus einem Gewebe mit einer niedrigen Luftdurchlässigkeit hergestellt. Beim Aufblasen des Airbags ist es zwar nötig, daß das Gewebe, gegen das beim Aufblasen eines Airbags das in diesen einströmende Gas fließt, eine niedrige Luftdurchlässigkeit aufweist, um damit ein rasches Aufblasen zu gewährleisten, wenn aber ein Aufprallen des Fahrzeuginsassen auf den Airbag erfolgt, muß einem Teil der eingeströmten Luft die Möglichkeit gegeben werden, wieder entweichen zu können, um so ein sanftes Auffangen des Fahrzeuginsassen zu gewährleisten.

Deshalb besteht ein Airbag oft aus zwei Teilen mit unterschiedlicher Luftdurchlässigkeit. Ein solcher Airbag ist aus EP-A-509 399, das als nächstliegender Stand der Technik angesehen wird, bekannt. Der Teil des Airbags, gegen den beim Aufblasen das einströmende Gas fließt, wird üblicherweise als Kontaktteil bezeichnet. Der Teil, der ein partielles Austreten des in den Airbag eingeströmten Gases beim Aufprallen des Fahrzeuginsassen ermöglicht, wird als Filterteil bezeichnet. Diese Bezeichnung rührt daher, daß das Gewebe des Filterteils zusätzlich die Aufgabe hat, in den Airbag mit dem vom Generator erzeugten Gas eingeströmte heiße Partikel abzufangen, das heißt abzufiltern.

Teilweise werden Airbags nur aus Kontaktgeweben hergestellt. Für das Abfliessen des Gases werden in solchen Fällen Öffnungen in den Airbag eingebracht. Für Beifahrerairbags ist es in einzelnen Fällen auch üblich, diese lediglich aus Filtergeweben herzustellen.

Um bei zweiteiligen Airbags die Forderungen der raschen Aufblasbarkeit und der Abströmmöglichkeit für das Gas zu erfüllen, müssen die beiden Teile des Airbags unterschiedliche Luftdurchlässigkeiten aufweisen. Diese soll beim Kontaktteil unter 10 l/dm$^2$·min bei 500 Pa Prüfdifferenzdruck liegen. Für den Filterteil werden, je nach Fahrzeugtype, Luftdurchlässigkeiten zwischen 20 und 100 l/dm$^2$·min bei 500 Pa Prüfdifferenzdruck gefordert. Bei den bisher hergestellten Airbaggeweben wurde die für den Kontaktteil geforderte niedrige Luftdurchlässigkeit häufig durch Beschichten der Gewebe eingestellt. Neben den höheren Produktionskosten haben jedoch beschichtete Gewebe noch weitere Nachteile wie beispielsweise einen höheren Platzbedarf bei der Unterbringung des Airbags im Lenkrad eines Fahrzeugs. In neuerer Zeit wurden deshalb Verfahren entwickelt, die auch die Herstellung von Geweben mit niedriger Luftdurchlässigkeit ohne eine zusätzliche Beschichtung ermöglichen.

Daneben muß aber ein Gewebe für die Herstellung von Airbags noch eine Reihe weiterer Forderungen erfüllen. So muß das Gewebe eine ausreichend hohe Festigkeit als Voraussetzung für die Funktionstüchtigkeit aufweisen. Außerdem werden gut faltbare Gewebe gewünscht, um damit den Platz für die Unterbringung im Lenkrad möglichst klein zu halten. In diesem Zusammenhang wird auch die Forderung nach möglichst leichten Geweben erhoben.

Von besonderem Interesse ist die kostengünstige Herstellung der Airbaggewebe. Da wegen der erforderlichen niedrigen Luftdurchlässigkeit verhältnismäßig dichte Gewebe erzeugt werden müssen, ist es notwendig, in der Weberei mit einer hohen Zahl von Kett- und Schußfaden pro cm, d.h. mit einer hohen Gewebedichte, zu arbeiten. Vor allem die Zahl der Schußfäden zeigt einen direkten Einfluß auf die Produktionsleistung in der Weberei.

Deshalb bestand die Aufgabe, einen Airbag und Airbaggewebe zu schaffen die sowohl leichter sind als auch kostengünstiger herzustellen.

Diese Aufgabe wird durch das Kennzeichen der Ansprüche 1, 8 und 9 gelöst.

Überraschend wurde nun gefunden, daß eine deutliche Erhöhung der Webleistung und auch eine Verringerung der Gewebegewichte möglich ist, wenn an Stelle von Synthesegarnen aus den üblicherweise eingesetzten Vollfasern Synthesegarne aus Filamenten, die innen hohl sind, zum Einsatz kommen. Solche Fasern werden üblicherweise als Hohlfasern bezeichnet. Bei gleichem Grad der Abdeckung und damit gleicher Luftdurchlässigkeit ist mit Synthese-Filamentgarnen aus Hohlfasern eine höhere Webleistung dadurch möglich, daß weniger Garne pro cm eingesetzt werden können. Darüberhinaus läßt sich durch den Einsatz von Hohlfasern bei gleichem Grad der Abdeckung und gleicher Luftdurchlässigkeit ein leichteres Gewebe erzeugen, was bei Airbag-Geweben besonders erwünscht ist. Als weiterer wesentlicher Vorteil des Einsatzes von Hohlfasern wurde eine geringere Gefahr von Verletzungen der Fahrzeuginsassen durch glühende Partikel bei Airbags aus Hohlfasern festgestellt.

Synthese-Filamentgarne aus Hohlfasern sind bekannt. Auch die Verfahren zur Herstellung dieser Garne sind in der Chemiefaserindustrie bekannt. Hohlfasern finden teilweise in Bekleidungstextilien, seltener in technischen Textilien Einsatz. Besonders häufig werden Synthese-Hohlfasern mit speziellen semipermeablen Eigenschaften der Faserwand als Membranen in der Trenntechnik eingesetzt.

Auch für Technische Gewebe ist der Einsatz von Hohlfasern bereits beschrieben worden. So wird in DE-U 69 - 38 252 ein Gewebe aus Hohlfasern als Beschichtungsgrundmaterial für Planenstoffe etc. bzw. als Armierungswebe in Beton etc. vorgeschlagen. Das dort beschriebene Gewebe ist aber für Airbags völlig ungeeignet, da seine Gewebedichte mit Werten zwischen 15 und 20 % weit unter den für Airbaggewebe notwendigen Daten liegt.

Die für Airbaggewebe einzusetzenden Hohlfasern werden bevorzugt nach dem Schmelzspinnverfahren unter Einsatz dafür vorgesehener Spezialdüsen hergestellt. Diese Verfahren sind in der Chemiefaserindustrie bekannt. Als Polymere kommen besonders Polyester, Polyamid 6.6, Polyamid 6, Polyamid 4.6, Polypropylen und Polyethylen zum Einsatz. Aber auch andere schmelzspinnbare Polymere sind für die Herstellung der Hohlfasern geeignet. Als Polymere werden Polyamid 6.6, Polyamid 4.6 und Polyester bevorzugt.

Die Erfindung soll nicht auf Hohlfasern nach dem Schmelzspinnverfahren beschränkt bleiben. Auch nach anderen Verfahren ersponnene Synthese-Hohlfasern können zur Herstellung der erfindungsgemäßen Airbags und erfindungsgemäßen Gewebe Einsatz finden.

Die Erfindung soll auch nicht auf Synthesefaser-Garne, die nur aus Hohlfasern bestehen, beschränkt bleiben. Die erfindungsgemäßen Airbags und Gewebe können auch aus Mischungen von Hohlfasern mit normalen Vollfasern bestehen. Der zu wählende Mischungsanteil richtet sich nach den gewünschten Eigenschaften. Um die Vorteile der Hohlfasern ausreichend zu erhalten, werden Mischungen mit hohem Hohlfaseranteil bevorzugt. Die Reinverarbeitung von Hohlfasern wird besonders bevorzugt.

Die Mitverwendung normaler Vollfasern kann in Form einer Mischung der Einzelfilamente erfolgen, das heißt in einem Filamentgarn sind neben Hohlfasern auch normale Vollfasern enthalten. Ebenso können sogenannte Systemmischungen zum Einsatz kommen. Hierbei werden in einer Fadenrichtung Garne aus Hohlfasern, in der anderen Fadenrichtung Garne aus Vollfasern eingesetzt. Bei dieser Variante wird der Einsatz von Hohlfasergarnen im Schuß bevorzugt. Die Mischung kann auch durch einen rapportmäßigen Einsatz von Hohlfasergarnen neben Vollfasergarnen in der Kette bzw. im Schuß erfolgen.

Ebenso soll die Erfindung nicht auf den Einsatz von Hohlfasern mit normalem Rundprofil beschränkt bleiben. In der Chemiefaserindustrie sind Verfahren bekannt, die das Erspinnen von Profilfasern mit einem Hohlraum ermöglichen. Auch diese Fasern können zur Herstellung der erfindungsgemäßen Gewebe Einsatz finden.

Besonders wichtig ist für die Herstellung des erfindungsgemäßen Airbags und der erfindungsgemäßen Gewebe, daß die hierfür eingesetzten Hohlfasern einen Hohlflächenanteil von 10 - 40 %, bezogen auf die Gesamtquerschnittsfläche der Faser, aufweisen.

Ein geringerer Hohlflächenanteil als 10 % läßt die Vorteile gegenüber den normalen Vollfasern im Hinblick auf die höhere Webleistung und auf den besseren Abdeckungsgrad nicht mehr deutlich werden, da dann der Unterschied zur normalen Vollfaser zu gering wird. Ein Hohlflächenanteil über 40 % führt zu einer Versteifung der Faser und damit zu einer Verschlechterung der Faltbarkeit der Airbaggewebe. Außerdem wird die Produktionssicherheit bei der Herstellung von Fasern mit höherem Hohlflächenanteil verschlechtert. Ein bevorzugter Hohlflächenanteil liegt bei 10 - 30 %, besonders bevorzugt werden 15 - 25 %. Die hier gemachten Angaben betreffen jeweils den Hohlflächenanteil, bezogen auf die Gesamtquerschnittsfläche der Faser.

Ein weiterer sehr wesentlicher Vorteil der Verwendung von Hohlfasern zur Herstellung der erfindungsgemäßen Airbags und Gewebe ist die gegenüber Vollfasern höhere thermische Isolation der Gewebe bzw. der geringere Wärmeübertragungskoeffizient. Beim Auslösen der Airbagfunktion kommt es häufig vor, daß vom Generatorgas glühende Partikel mitgerissen werden und in den aufgeblasenen Airbag einfliessen. Diese glühenden Partikel können sogenannte Durchbrenner verursachen, das heißt, daß einzelne kleine Stellen im Filterteil des Airbags eventuell angeschmolzen werden, so daß ein Austreten der heißen Partikel in den Fahrgastraum möglich wird. Dadurch kann es zu Verbrennungen oder Hautirritationen bei dem in den Airbag eingetauchten Fahrzeuginsassen kommen.

Durch den Einsatz von Hohlfasern zur Herstellung des erfindungsgemäßen Airbags und der erfindungsgemäßen Gewebe kann diese Gefahr wesentlich verringert werden. Als Merkmal für die thermische Isolierung kann der Wärmewiderstand $R_w$ herangezogen werden. Für den Wärmewiderstand $R_w$ gilt folgende Definition:

$$R_w = \frac{1}{\lambda \cdot A}$$

Hierbei sind:

l =     Dicke des Gewebes
$\lambda$ =     Wärmeleitfähigkeit
A =     Fläche des Gewebes

Der Einfachheit wegen wird für die nachfolgende Berechnung die Gewebefläche jeweils mit 1 m$^2$ angesetzt. Für $\lambda$ gelten folgende Werte, die der Fachliteratur (Dobrinski, P., Krakau G. und Vogel, A., Physik für Ingenieure, Stuttgart, 1980) entnommen sind:

| | |
|---|---|
| Polyamid 6.6 | 0,3 W/(m·K) |

(fortgesetzt)

| | |
|---|---|
| Polyester | 0,3 W/(m·K) |
| Luft | 0,034 W/(m·K) |

Nimmt man als Beispiel ein Flächengewicht von 210 g/m$^2$ bzw. 0,021 g/cm$^2$, so erhält man nach folgender Formel die Dicke des Gewebes:

$$d = \frac{F}{D}$$

Hier bedeuten:

F= Flächengewicht
D= Dichte

Bei einer Dichte von 1,14 g/cm$^3$ für Polyamid 6.6 ergibt sich eine Dicke des Gewebes von

$$d = \frac{0,021}{1,14} = 0,018 \text{ cm entspr. } 1,8 \cdot 10^{-4} \text{ m}$$

Somit ergibt sich für eine normale Vollfaser aus Polyamid 6.6 bei dem obengenannten Flächengewicht von 210 g/m$^2$, bei der genannten Dichte für Polyamid 6.6 sowie bei der errechneten Dicke von 1,8·10$^{-4}$ m:

$$R_w = \frac{1,8 \cdot 10^{-4}}{0,3 \cdot 1} \frac{K}{W}$$

oder

$$R_w = 6,0 \cdot 10^{-4} \frac{K}{W} = 0,0006 \frac{K}{W}$$

Nimmt man dagegen eine Hohlfaser mit einem angenommenen Hohlflächenanteil von 20 %, bezogen auf die Gesamtquerschnittsfläche, und legt wieder ein Flächengewicht von 210 g/m$^2$ zugrunde, so ist es notwendig, bei der Berechnung des Wärmewiderstandes die beiden Teile der Polymerschicht und der trennenden Luftschicht additiv zusammenzusetzen. Aus der vorn errechneten Dicke der Polymerschicht ergibt sich dann für jede Einzelschicht eine Dicke von 9·10$^{-5}$ m und für die Luftschicht definitionsgemäß von 3,6·10$^{-5}$ m. Somit erhält man für $R_w$:

$$R_w = 3,0 \cdot 10^{-4} \frac{K}{W} + 10,6 \cdot 10^{-4} \frac{K}{W} + 3,0 \cdot 10^{-4} \frac{K}{W} = 16,6 \cdot 10^{-4} \frac{K}{W} = 0,00166 \frac{K}{W}$$

Aus dieser Rechnung ergibt sich, daß schon bei einem Hohlflächenanteil von 20 % eine Erhöhung des Wärmewiderstandes von ca. 175 % eintritt und daß also Airbaggewebe aus Hohlfasern, im Vergleich zu Geweben aus Vollfasern bei gleichem Flächengewicht eine deutlich verbesserte thermische Isolation und auch eine geringere Gefahr von sogenannten Durchbrennern erwarten lassen.

Die hier durchgeführten Berechnungen, die einen deutlichen Vorteil von Airbag-Geweben aus Hohlfasern gegenüber Airbag-Geweben aus Vollfasern aufzeigen, haben sich auch bei Aufblastests von Airbags, die aus Hohlfaser-Geweben hergestellt worden waren, bestätigt. In keinem Fall wurde bei diesen Tests ein sogenannter Durchbrenner registriert.

Die ganz oder teilweise aus Hohlfasern bestehenden Garne weisen einen Garntiter von 200 - 1 100 dtex auf. Kleinere Titer sind im Hinblick auf die Produktionsleistung problematisch, größere Titer können wegen der dann stark verschlechterten Faltbarkeit der Airbaggewebe nicht zum Einsatz kommen. Der Titer der Einzelfilamente liegt bevorzugt unter 8 dtex. Höhere Titer können zwar Verwendung finden, sie verschlechtern aber die Faltbarkeit der Gewebe.

Die für die Herstellung der Gewebe einzusetzenden Garne weisen bevorzugt eine Festigkeit über 60 cN/tex und eine Bruchdehnung von 10 - 30 % auf. Bei der Wahl der Schrumpfdaten muß unterschieden werden, ob das herzustellende Gewebe als Kontaktgewebe oder als Filtergewebe Einsatz finden soll. Für Kontaktgewebe liegen die Schrumpfwerte für Polyamid-Garne bei 6 - 10 %, für Polyester-Garne bei 6 - 12 %. Garne mit niedrigeren Schrumpfwerten finden für Filtergewebe Verwendung. Hier sind sowohl bei Polyamid- als auch bei Polyester-Garnen Schrumpfwerte zwischen 2 und 5 % zu wählen. In allen Fällen handelt es sich um Schrumpfwerte, die bei 190 °C ermittelt wurden.

Die Herstellung der Gewebe für die erfindungsgemäßen Airbags kann auf allen in der Webereitechnik bekannten Maschinen erfolgen.

Wichtig für einen funktionstüchtigen Airbag ist das genaue Einhalten bestimmter Gewebedichten für die Kontakt- bzw. Filtergewebe. Die Gewebedichte ist ein wichtiger Faktor für das Einstellen der gewünschten Luftdurchlässigkeit. Die Gewebedichte wird im wesentlichen durch die Zahl der eingesetzten Garne pro Gewebelängeneinheit, die sogenannte Fadenzahl, beeinflußt. Diese ist vom Garntiter abhängig, das heißt, daß bei einem höheren Garntiter zum Erzielen gleicher Gewebedichte eine geringere Fadenzahl benötigt wird als bei einem niedrigeren Garntiter.

Die Gewebedichte wird, vor allem in außereuropäischen Ländern, vielfach durch den sogenannten Cover Factor, auch als Kappa Factor bezeichnet, ausgedrückt. Dieser Faktor läßt sich mit der nachfolgenden Formel auf einfache Weise errechnen:

$$K = N_w \cdot \sqrt{D_w} + N_f \cdot \sqrt{D_f}$$

Hierbei bedeuten:

$K =$ Cover Factor
$N_w =$ Fadenzahl in inch in Kettrichtung
$D_w =$ Garntiter in denier (den) in Kettrichtung
$N_f =$ Fadenzahl in inch in Schußrichtung
$D_f =$ Garntiter in denier (den) in Schußrichtung

Gewebe für Airbags weisen bevorzugt eine symmetrische Gewebeeinstellung auf, das heißt, daß die Kett- und die Schußfadenzahlen gleich oder nahezu gleich sind und in Kett- und in Schußrichtung gleiche Garntiter eingesetzt werden. Die Notwendigkeit der symmetrischen Gewebeeinstellung ergibt sich aus der Forderung der Automobilhersteller nach in Kett- und Schußrichtung gleichen Gewebefestigkeiten.

Im Falle der bei Airbaggeweben üblichen symmetrischen Gewebeeinstellung läßt sich die obige Formel in der folgenden vereinfachten Form anwenden:

$$K = 2 \cdot N \cdot \sqrt{D}$$

Hier bedeuten nun:

$K =$ Cover Factor
$N =$ Fadenzahl in inch in Kette und Schuß
$D =$ Garntiter in denier (den) in Kette und Schuß

Mit diesem Cover Factor erhält man also auf eine sehr einfache Weise ein Maß für die Gewebedichte. Problematisch ist allerdings diese Formel dann, wenn Gewebe aus unterschiedlichen Fasermaterialien miteinander verglichen werden müssen. Hier kommt man wegen der meist unterschiedlichen spezifischen Gewichte der unterschiedlichen Rohmaterialien zu nicht mehr vergleichbaren Werten. Und auch die Werte von Geweben mit unterschiedlichen Gewebebindungen lassen sich im allgemeinen nicht miteinander vergleichen.

Deshalb wurden die hier für die Gewebedichte angegebenen Zahlen nach der Formel von Walz (Kleinheins S., Textile Prüfungen, Obernburg, 1973) errechnet, bei der die unterschiedlichen spezifischen Gewichte der Rohstoffe berücksichtigt werden und außerdem Korrekturfaktoren für verschiedene Gewebebindungen vorgesehen sind. Diese Art der Errechnung der Gewebedichte ist vor allem in der deutschen Textilindustrie gut bekannt. Die Formel lautet:

$$DG\,\% = (d_k + d_s)^2 \cdot f_k \cdot f_s$$

Hierbei bedeuten

$d_{k's} =$ Substanzdurchmesser des Kett- bzw. Schußgarnes in mm
$f_{k's} =$ Kettfäden bzw. Schußfäden pro cm

Der Substanzdurchmesser der Garne wird wie folgt berechnet:

$$d_{k's} = \frac{\sqrt{dtex_{k's}}}{88,5 \cdot \sqrt{\text{Dichte in g/cm}^3}}$$

Für die Dichte wird bei Polyamid 6.6-Garnen üblicherweise mit dem Durchschnittswert von 1,14 g/cm$^3$ und bei Polyestergarnen mit dem Durchschnittswert von 1,38 g/cm$^3$ gearbeitet.

Liegen von der Leinwandbindung abweichende Bindungen vor, so muß ein Bindungs-Korrekturfaktor in die Berechnung einbezogen werden. Dieser ist beispielsweise bei den bei Airbag-Geweben vorkommenden Panamabindungen 2:2 = 0,56 und bei Köperbindungen 3:1 ebenfalls 0,56. Mit diesen Korrekturfaktoren wird die gemäß der Formel nach Walz errechnete Gewebedichte multipliziert.

Die Gewebedichte nach Walz wird in % angegeben. Bei sehr dichten Geweben können Werte über 100 % auftreten.

Um einen gebrauchstüchtigen Airbag aus Synthese-Hohlfasergarnen herstellen zu können, müssen die Gewebedichten auf Kontakt- bzw. Filtergewebe gut abgestimmt werden. So hat sich gezeigt, daß die Kontaktgewebe eine Gewebedichte > 72 %, bevorzugt > 80 % aufweisen müssen, um eine für das rasche Aufblasen eines Airbags ausreichende Voraussetzung zu schaffen. Um einen guten Luftdurchgang zu erhalten, müssen die Filtergewebe Dichten zwischen 45 und 68 % aufweisen. Diese Zahlen gelten für das fertig ausgerüstete Gewebe, wie es im Airbag zum Einsatz gelangt.

Die wesentlichen Beeinflussungsgrößen für die Gewebedichte bilden die Fadenzahlen pro Gewebelängeneinheit und die Titer der eingesetzten Garne. Im fertig ausgerüsteten Gewebe müssen bei den verschiedenen Titern für die Herstellung der Airbag-Kontaktgewebe die folgenden Fadenzahlen/cm eingehalten werden:

| Garntiter | Polyamid 6.6 | Polyester |
|-----------|--------------|-----------|
| 235 dtex | 26 - 31 | 29 - 34 |
| 470 dtex | 18 - 24 | 21 - 25 |
| 640 dtex | 16 - 20 | 17,5 - 22 |
| 700 dtex | 15 - 19 | 16,5 - 21 |
| 940 dtex | 13 - 16 | 14,5 - 17 |

Nachstehend sind die Gewebedichten in % für die mittleren obengenannten Fadenzahlen angegeben:

| Garntiter | Polyamid 6.6 | Polyester |
|-----------|--------------|-----------|
| 235 dtex | 85,4 | 86,2 |
| 470 dtex | 92,8 | 92,0 |
| 640 dtex | 92,9 | 92,4 |
| 700 dtex | 90,6 | 91,0 |
| 940 dtex | 88,6 | 86,3 |

Für Filtergewebe werden im ausgerüsteten Gewebe folgende Fadenzahlen/cm benötigt:

| Garntiter | Polyamid 6.6 | Polyester |
|-----------|--------------|-----------|
| 235 dtex | 21 - 25 | 23 - 27 |
| 470 dtex | 15 - 18 | 16 - 20 |
| 640 dtex | 13 - 15,5 | 14 - 17 |
| 700 dtex | 12 - 14,5 | 13,5 - 16 |
| 940 dtex | 10,5 - 12,5 | 11,5 - 14 |

Daraus errechnen sich die folgenden Gewebedichten in %:

| Garntiter | Polyamid 6,6 | Polyester |
|-----------|--------------|-----------|
| 235 dtex | 46,3 - 65,7 | 46,0 - 63,4 |
| 470 dtex | 47,4 - 68,2 | 44,5 - 69,6 |

(fortgesetzt)

| Garntiter | Polyamid 6,6 | Polyester |
|---|---|---|
| 640 dtex | 48,4 - 68,9 | 46,4 - 68,4 |
| 700 dtex | 45,2 - 65,9 | 47,2 - 66,3 |
| 940 dtex | 46,4 - 65,8 | 46,0 - 68,2 |

Die hier angegebenen Zahlen gelten für ausgerüstete Gewebe. Die Fadenzahlen der Rohgewebe sind niedriger, da bei der Ausrüstung noch ein Schrumpf eintritt, der zu erhöhten Fadenzahlen pro Gewebelängeneinheit führt. Für die Rohgewebe können folgende Fadenzahlen/cm bei der Herstellung der Airbag-Gewebe angesetzt werden:

| Garntiter | Airbag-Kontaktgewebe | | Airbag-Filtergewebe | |
|---|---|---|---|---|
| | Polyester | Polyamid 6.6 | Polyester | Polyamid 6.6 |
| 235 dtex | 27 - 33 | 24 - 30 | 22 - 26 | 20 - 24 |
| 470 dtex | 19 - 24 | 16 - 23 | 15 - 19 | 14 - 17 |
| 640 dtex | 16 - 20 | 14 - 19 | 13 - 16 | 12 - 15 |
| 700 dtex | 15 - 19 | 13 - 18 | 12 - 15 | 11 - 14 |
| 940 dtex | 13 - 16 | 12 - 15 | 10 - 13 | 9 - 12 |

Die hier genannten Fadenzahlen liegen um ca. 1 - 3/cm niedriger als bei Airbaggeweben, die aus normalen Vollfasern hergestellt werden. Umgekehrt wird, werden bei Garnen aus Voll- bzw. aus Hohlfasern gleiche Fadenzahlen eingesetzt, bei Verwendung von Hohlfasern ein Airbag-Gewebe mit einem dem Anteil der Hohlfläche entsprechenden geringerem Flächengewicht erhalten, was sich beim Einsatz im Airbag positiv auswirkt.

Um die auf dem Garn von der Faserherstellung enthaltenen Präparationen und Avivagen zu entfernen, ist es notwendig, die für Airbags vorgesehenen Gewebe einem Waschprozeß zu unterziehen. Bei Geweben aus Polyamidgarnen wird bei dieser Naßbehandlung auch ein deutlicher Schrumpf ausgelöst, was zur weiteren Verdichtung der auf dem Webstuhl bereits dicht eingestellten Gewebe notwendig ist. Hierfür wurde in EP-A 436 950 ein geeignetes Verfahren beschrieben. Dieses Verfahren kann sowohl für die Herstellung von Kontakt- als auch von Filtergeweben Einsatz finden. Der Grad des hierbei in einem wäßrigen Bad auslösbaren Schrumpfes wird von den Ausgangsschrumpfwerten der eingesetzten Garne sehr stark beeinflußt. Da für Kontaktgewebe eine höhere Gewebedichte benötigt wird als für Filtergewebe, ist es empfehlenswert, bei Kontaktgeweben eine stärkere Schrumpfauslösung bei der Naßbehandlung herbeizuführen als bei der Herstellung von Filtergeweben. In den oben aufgeführten Schrumpfwerten der einzusetzenden Garne kommt dieser Unterschied zum Ausdruck.

Die zur Schrumpfauslösung und zur Entfernung von Präparationen bzw. Avivagen einer Naßbehandlung unterzogenen Gewebe werden anschließend getrocknet, wobei im Interesse einer guten Alterungsbeständigkeit der Airbaggewebe ein besonderes Trocknungsverfahren nach der Naßbehandlung vorgenommen werden muß. Dieses wurde in EP-A 523 546 beschrieben.

Bei Geweben aus Polyesterfasern tritt bei der Waschpassage nur ein geringer Schrumpf ein. Hier wird der Schrumpf bei der nachfolgenden Heißluftpassage ausgelöst. So wird beispielsweise bei 150°C getrocknet und anschließend bei 190 °C thermofixiert.

Ein weiteres Nachbehandlungsverfahren, zweckmäßigerweise nach einer Waschpassage, ist eine Kalanderbehandlung der erfindungsgemäßen Gewebe. Für dieses Ausrüstungsverfahren sind Hohlfaser-Synthese-Filamentgarne besonders geeignet, da Hohlfasern durch den Druck der Kalanderwalzen eine stärkere Abflachung zeigen als normale Vollfasern und somit, im Vergleich zu entsprechenden Geweben aus Vollfasern, einen besseren Gewebeschluß ergeben, was sich positiv auf die Luftdurchlässigkeit auswirkt.

Der Vorteil der Hohlfasern gegenüber normalen Vollfasern zeigt sich beim Vergleich der Gewebedichten, wie dies in den Ausführungsbeispielen noch näher aufgezeigt wird. Bei Einsatz von Synthesefilamentgarnen aus Hohlfasern kann, im Vergleich zu Synthesefilamentgarnen aus Vollfasern, mit geringeren Fadenzahlen gearbeitet werden. Damit werden bei Einsatz von Hohlfasergarnen auch geringere Gewebedichten erhalten, wie die Ausführungbeispiele dies zeigen. Bei dem erfindungsgemäßen Airbag erhält man gegenüber herkömmlichen Airbags, deren Gewebe aus normalen Vollfasern bestehen, somit deutliche Vorteile. Das bei gleichem Abdeckungsgrad und damit auch gleicher Luftdurchlässigkeit mit leichterem Gewicht herstellbare Airbag-Gewebe aus Hohlfasern ergibt gegenüber den herkömmlichen schwereren Geweben aus normalen Vollfasern eine bessere Entfaltbarkeit und damit beim Auslösen der Airbagfunktion ein sichereres Auffangen des Fahrzeuginsassen.

Besonders vorteilhaft wirkt sich das leichtere Gewebe bei sogenannten Out-of-Position-Unfällen aus. Hierunter ist zu verstehen, daß sich der Fahrer oder Beifahrer im Augenblick der Kollision nicht in seiner normalen Sitzhaltung befindet. Der beim explosionsartigen Aufblasen des Airbags auf die Fahrzeuginsassen durch den Airbag übertragene Impuls wird bei einer niedrigeren Gewebemasse geringer, was sich in Form eines sanfteren Auffangens des Fahrzeuginsassen im Falle der Kollision und eines niedrigeren Verletzungsrisikos bei den sogenannten Out-of-Position-Unfällen auswirkt.

Somit bietet der erfindungsgemäße Airbag erhebliche Vorteile im Hinblick auf die Funktionstüchtigkeit des Airbag-Systems und besonders im Hinblick auf den Schutz der Fahrzeuginsassen gegen Verletzungen.

**Ausführungsbeispiele**

Beispiel 1:

In diesem Beispiel wird die Herstellung eines Airbag-Kontaktgewebes aus Hohlfaser-Polyamid 6.6-Garnen beschrieben. Der Hohlflächenanteil lag bei ca. 18 %, bezogen auf die Gesamtquerschnittsfläche. Hierzu wurde ein Garn mit einem Titer 470 dtex und einer Filamentzahl von 72 in symmetrischer Gewebeeinstellung zu einem leinwandbindigen Gewebe verarbeitet. Das eingesetzte Garn hatte einen Heißluftschrumpf von 8,7 % (gemessen bei 190 °C). Die Fadenzahl in Kette und Schuß betrug jeweils 19/cm. Hieraus ergibt sich eine Gewebedichte von 76,0 % im Rohgewebe. Das Gewebe wurde zum Auslösen des Schrumpfes einer Naßbehandlung gemäß dem in EP 436 950 beschriebenen Verfahren unterzogen. Die Gewebedichte nahm hierbei auf 92,8 % zu. Das Gewebegewicht lag bei 235 g/m$^2$. An dem so hergestellten Gewebe wurde eine Luftdurchlässigkeit von 7,6 l/dm$^2$·min bei 500 Pa Prüfdifferenzdruck gemessen.

Bei den hier angegebenen Luftdurchlässigkeiten handelt es sich jeweils um Werte, die nach DIN 53 887 ermittelt wurden. Um auch bei den Geweben mit sehr niedriger Luftdurchlässigkeit jeweils noch ein deutliches Prüfsignal zu erhalten, wurde jedoch in Abweichung von dieser DIN-Norm der Prüfdifferenzdruck auf 500 Pa erhöht.

Vergleichsbeispiel 1

An Stelle von Hohlfasern wurden in dem Vergleichsbeispiel Polyamid 6.6-Filamentgarne aus normalen Vollfasern eingesetzt. Der Garntiter blieb unverändert. Das Garn hatte einen Heißluftschrumpf von 8,4 %, gemessen bei 190 °C. Auch hier wurde ein leinwandbindiges Gewebe in symmetrischer Einstellung hergestellt. Allerdings betrug nun die Fadenzahl in Kette und Schuß jeweils 21/cm. Hieraus ergibt sich eine Gewebedichte von 92,8 %. Die Weiterverarbeitung des Gewebes erfolgte wie bei dem Ausführungsbeispiel. Die Gewebedichte nahm nach der Naßbehandlung auf 111,3 % zu. Das Gewebegewicht lag bei 261 g/m$^2$. An dem so hergestellten Gewebe wurde eine Luftdurchlässigkeit von 6,5 l/dm$^2$·min bei 500 Pa Prüfdifferenzdruck gemessen.

Dieses Beispiel zeigt, daß mit Hohlfasergarnen zum Erreichen einer ungefähr gleichen Luftdurchlässigkeit mit geringeren Fadenzahlen gearbeitet werden kann und damit leichtere Gewebe herstellbar sind.

Beispiel 2:

In diesem Beispiel wird die Herstellung eines Airbag-Filtergewebes aus Hohlfaser-Polyamid 6.6-Garnen beschrieben. Der Hohlflächenanteil lag bei ca. 29 %, bezogen auf die Gesamtquerschnittsfläche. Hierzu wird ein Garn mit einem Titer 470 dtex und einer Filamentzahl von 72 in symmetrischer Gewebeeinstellung zu einem leinwandbindigen Gewebe verarbeitet. Das eingesetzte Garn hatte einen Heißluftschrumpf von 3,7 % (gemessen bei 190 °C). Die Fadenzahl in Kette und Schuß betrug jeweils 14/cm. Hieraus ergibt sich eine Gewebedichte im Rohgewebe von 41,3 %. Das Gewebe wurde einer Naßbehandlung gemäß dem in EP 523 546 beschriebenen Verfahren unterzogen. Die Gewebedichte nahm hierbei auf 47,4 % zu. Das Gewebegewicht lag bei 161 g/m$^2$. An dem so hergestellten Gewebe wurde eine Luftdurchlässigkeit von 88 l/dm$^2$·min bei 500 Pa Prüfdifferenzdruck gemessen.

Vergleichsbeispiel 2

An Stelle von Hohlfasern wurden in dem Vergleichsbeispiel Polyamid 6.6-Filamentgarne aus normalen Vollfasern eingesetzt. Der Garntiter blieb unverändert. Das Garn hatte einen Heißluftschrumpf von 3,4 %, gemessen bei 190 °C. Auch hier wurde ein leinwandbindiges Gewebe in symmetrischer Einstellung hergestellt. Allerdings betrug nun die Fadenzahl in Kette und Schuß jeweils 16/cm. Hieraus ergibt sich eine Gewebedichte im Rohgewebe von 53,9%. Die Weiterverarbeitung des Gewebes erfolgte wie bei dem Ausführungsbeispiel. Die Gewebedichte nahm nach der Naßbehandlung auf 60,8 % zu. Das Gewebegewicht lag bei 182 g/m$^2$. An dem so hergestellten Gewebe wurde eine Luftdurchlässigkeit von 80 l/dm$^2$·min bei 500 Pa Prüfdifferenzdruck gemessen.

Auch dieses Beispiel zeigt, daß mit Hohlfasergarnen zum Erreichen einer ungefähr gleichen Luftdurchlässigkeit mit geringeren Fadenzahlen gearbeitet werden kann und damit leichtere Gewebe herstellbar sind.

Beispiel 3:

In diesem Beispiel wird die Herstellung eines Airbag-Kontaktgewebes aus Hohlfaser-Polyester-Garnen beschrieben. Der Hohlflächenanteil lag bei ca. 11 %, bezogen auf die Gesamtquerschnittsfläche der Faser. Hierzu wurde ein Garn mit einem Titer 640 dtex und einer Filamentzahl von 140 in symmetrischer Gewebeeinstellung zu einem leinwandbindigen Gewebe verarbeitet. Das eingesetzte Garn hatte einen Heißluftschrumpf von 8,9% (gemessen bei 190 °C). Die Fadenzahl in Kette und Schuß betrug jeweils 17,5/cm. Hieraus ergibt sich eine Gewebedichte von 72,5 % im Rohgewebe. Das Gewebe wurde nach einer Waschbehandlung auf einem Jigger bei 150°C auf einer Zylindertrockenmaschine getrocknet und anschließend auf einem Spannrahmen bei 190°C thermofixiert. Die Gewebedichte nahm bei dieser Behandlung auf 80,2 % zu. Das Gewebegewicht lag bei 271 g/m$^2$. An dem so hergestellten Gewebe wurde eine Luftdurchlässigkeit von 9,2 l/dm$^2$·min bei 500 Pa Prüfdifferenzdruck gemessen.

Vergleichsbeispiel 3

An Stelle von Hohlfasern wurden in dem Vergleichsbeispiel Polyester-Filamentgarne aus normalen Vollfasern eingesetzt. Der Garntiter blieb unverändert. Das Garn hatte einen Heißluftschrumpf von 8,2 %, gemessen bei 190 °C. Auch hier wurde ein leinwandbindiges Gewebe in symmetrischer Einstellung hergestellt. Allerdings betrug nun die Fadenzahl in Kette und Schuß jeweils 19/cm. Hieraus ergibt sich eine Gewebedichte von 85,5 % im Rohgewebe. Die Weiterverarbeitung des Gewebes erfolgte wie bei dem Ausführungsbeispiel. Die Gewebedichte nahm nach der Naßbehandlung auf 94,7 % zu. Das Gewebegewicht lag bei 293 g/m$^2$. An dem so hergestellten Gewebe wurde eine Luftdurchlässigkeit von 9,7 l/dm$^2$·min bei 500 Pa Prüfdifferenzdruck gemessen.

Auch dieses Beispiel zeigt, daß mit Hohlfasergarnen zum Erreichen einer ungefähr gleichen Luftdurchlässigkeit mit geringeren Fadenzahlen gearbeitet werden kann und damit leichtere Gewebe herstellbar sind.

Beispiel 4:

In diesem Beispiel wird die Herstellung eines Airbag-Filtergewebes aus Hohlfaser-Polyester-Garnen beschrieben. Der Hohlfächenanteil lag hier bei 19 %, bezogen auf die Gesamtquerschnittsfläche. Hierzu wurde ein Garn mit einem Titer 640 dtex und einer Filamentzahl von 140 in symmetrischer Gewebeeinstellung zu einem leinwandbindigen Gewebe verarbeitet. Das eingesetzte Garn hatte einen Heißluftschrumpf von 2,9% (gemessen bei 190 °C). Die Fadenzahl in Kette und Schuß betrug jeweils 14,5/cm. Hieraus ergibt sich eine Gewebedichte im Rohgewebe von 49,8 %. Das Gewebe wurde einer Naßbehandlung und Thermofixierung, wie in Beispiel 3 beschrieben, unterzogen. Die Gewebedichte nahm hierbei auf 55,4 % zu. Das Gewebegewicht lag bei 224 g/m$^2$. An dem so hergestellten Gewebe wurde eine Luftdurchlässigkeit von 68 l/dm$^2$·min bei 500 Pa Prüfdifferenzdruck gemessen.

Vergleichsbeispiel 4

An Stelle von Hohlfasern wurden in dem Vergleichsbeispiel Polyester-Filamentgarne aus normalen Vollfasern eingesetzt. Der Garntiter blieb unverändert. Das Garn hatte einen Heißluftschrumpf von 3,7 %, gemessen bei 190 °C. Auch hier wurde ein leinwandbindiges Gewebe in symmetrischer Einstellung hergestellt. Allerdings betrug nun die Fadenzahl in Kette und Schuß jeweils 16/cm. Hieraus ergibt sich eine Gewebedichte im Rohgewebe von 60,6 %. Die Weiterverarbeitung des Gewebes erfolgte wie bei dem Ausführungsbeispiel. Die Gewebedichte nahm nach der Ausrüstung auf 66,8 % zu. Das Gewebegewicht lag bei 247 g/m$^2$. An dem so hergestellten Gewebe wurde eine Luftdurchlässigkeit von 61 l/dm$^2$·min bei 500 Pa Prüfdifferenzdruck gemessen.

Dieses Beispiel zeigt ebenso wie die vorangehenden, daß mit Hohlfasergarnen zum Erreichen einer ungefähr gleichen Luftdurchlässigkeit mit geringeren Fadenzahlen gearbeitet werden kann und somit also mit Hohlfasergarnen leichtere Gewebe herstellbar sind.

**Patentansprüche**

1. Airbag, bestehend aus mindestens einem Kontaktgewebe und/oder mindestens einem Filtergewebe, wobei das Kontaktgewebe eine Luftdurchlässigkeit < 10 l/dm$^2$·min bei 500 Pa Prüfdifferenzdruck und das Filtergewebe eine Luftdurchlässigkeit von 20 - 100 l/dm$^2$·min bei 500 Pa Prüfdifferenzdruck aufweist, dadurch gekennzeichnet, daß die Kontakt- und/oder Filtergewebe mindestens teilweise aus Synthese-Filamentgarnen bestehen, die innen hohl sind, daß der Hohlflächenanteil, bezogen auf die Gesamtquerschnittsfläche der Filamente, 10 - 40 % beträgt, daß die Kontaktgewebe eine Gewebedichte, berechnet nach der Methode von Walz, > 72 % aufweisen und daß die Filtergewebe eine Gewebedichte, berechnet nach der Methode von Walz, von 45 - 68 % aufweisen.

2. Airbag nach Anspruch 1, dadurch gekennzeichnet, daß die Kontakt- und/oder Filtergewebe mindestens teilweise aus Synthese-Filamentgarnen bestehen, die innen hohl sind, daß der Hohlflächenanteil, bezogen auf die Gesamtquerschnittsfläche der Filamente, 10 - 30 % beträgt, daß die Kontaktgewebe eine Gewebedichte, berechnet nach der Methode von Walz, > 72 % aufweisen und daß die Filtergewebe eine Gewebedichte, berechnet nach der Methode von Walz, von 45 - 68 % aufweisen.

3. Airbag nach Anspruch 1, dadurch gekennzeichnet, daß die Kontakt- und/oder Filtergewebe mindestens teilweise aus Synthese-Filamentgarnen bestehen, die innen hohl sind, daß der Hohlflächenanteil, bezogen auf die Gesamtquerschnittsfläche der Filamente, 15 - 25 % beträgt, daß die Kontaktgewebe eine Gewebedichte, berechnet nach der Methode von Walz, > 72 % aufweisen und daß die Filtergewebe eine Gewebedichte, berechnet nach der Methode von Walz, von 45 - 68 % aufweisen.

4. Airbag nach mindestens einem der Ansprüche 1 - 3, dadurch gekennzeichnet, daß die Synthese-Filamentgarne einen Titer von 200 - 1100 dtex aufweisen.

5. Airbag nach mindestens einem der Ansprüche 1 - 4, dadurch gekennzeichnet, daß der Filamenttiter der Synthese-Filamentgarne < 8 dtex ist.

6. Airbag nach mindestens einem der Ansprüche 1 - 5, dadurch gekennzeichnet, daß die Synthese-Filamentgarne eine Festigkeit > 60 cN/tex und eine Bruchdehnung von 10 - 30 % aufweisen.

7. Airbag nach mindestens einem der Ansprüche 1 - 6, dadurch gekennzeichnet, daß die Synthese-Filamentgarne aus Polyester, Polyamid 6.6, Polyamid 6, Polyamid 4.6, Polypropylen oder Polyethylen bestehen.

8. Kontaktgewebe für Airbags nach mindestens einem der Ansprüche 1 - 7 mit einer Luftdurchlässigkeit < 10 l/dm$^2$.min bei 500 Pa Prüfdifferenzdruck, dadurch gekennzeichnet, daß das Gewebe mindestens teilweise aus Synthese-Filamentgarnen besteht, die innen hohl sind, daß der Hohlflächenanteil, bezogen auf die Gesamtquerschnittsfläche der Filamente, 10 - 40 % beträgt und daß das Gewebe eine Gewebedichte, berechnet nach der Methode von Walz, > 72 % aufweist.

9. Filtergewebe für Airbags nach mindestens einem der Ansprüche 1 - 7 mit einer Luftdurchlässigkeit von 20 - 100 l/dm$^2$·min bei 500 Pa Prüfdifferenzdruck, dadurch gekennzeichnet, daß das Gewebe mindestens teilweise aus Synthese-Filamentgarnen besteht, die innen hohl sind, daß der Hohlflächenanteil, bezogen auf die Gesamtquerschnittsfläche der Filamente, 10 - 40 % beträgt und daß das Gewebe eine Gewebedichte, berechnet nach der Methode von Walz, von 45 - 68 % aufweist.

## Claims

1. Airbag comprising at least one contact woven fabric and/or at least one filter woven fabric, the contact woven fabric having an air permeability of < 10 l/dm$^2$·min at 500 Pa test differential pressure and the filter woven fabric having an air permeability of 20 - 100 l/dm$^2$·min at 500 Pa test differential pressure, characterised in that the contact woven fabric and/or filter woven fabric comprise at least partially of synthetic filament yarns that are hollow on the inside, that the hollow area fraction is 10 - 40%, referred to the total cross-section area of the filaments, that the contact woven fabric has a woven fabric density, calculated according to the Walz method, of > 72%, and that the filter woven fabric has a woven fabric density, calculated according to the Walz method, of 45 - 68 %.

2. Airbag according to claim 1, characterised in that the contact woven fabric and/or filter woven fabric comprise at least partially of synthetic filament yarns that are hollow on the inside, that the hollow area fraction is 10 - 30 %, referred to the total cross-section area of the filaments, that the contact woven fabric has a woven fabric density of > 72%, calculated according to the Walz method, and that the filter woven fabric has a woven fabric density of 45 - 68 %, calculated according to the Walz method.

3. Airbag according to claim 1, characterised in that the contact woven fabric and/or filter woven fabric comprise at least partially of synthetic filament yarns that are hollow on the inside, that the hollow area fraction is 15 - 25 %, referred to the total cross-section area of the filaments, that the contact woven fabric has a woven fabric density of > 72%, calculated according to the Walz method, and that the filter woven fabric has a woven fabric density of 45 - 68 %, calculated according to the Walz method.

**EP 0 616 061 B1**

4. Airbag according to at least one of claims 1 to 3, characterised in that the synthetic filament yarns have a titre of 200 - 1100 dtex.

5. Airbag according to at least one of claims 1 to 4, characterised in that the filament titre of the synthetic filament yarns is < 8 dtex.

6. Airbag according to at least one of claims 1 to 5, characterised in that the synthetic filament yarns have a strength of > 60 cN/tex and an elongation at rupture of 10 - 30 %.

7. Airbag according to at least one of claims 1 - 6, characterised in that the synthetic filament yarns comprise polyester, polyamide 6.6, polyamide 6, polyamide 4.6, polypropylene or polyethylene.

8. Contact woven fabric for airbags according to at least one of claims 1 to 7, with an air permeability of < 10 l/dm$^2$. min at 500 Pa test differential pressure, characterised in that the woven fabric comprises at least partially of synthetic filament yarns that are hollow on the inside, that the hollow area fraction is 10 - 40 %, referred to the total cross-section area of the filaments, and that the woven fabric has a woven fabric density of > 72 %, calculated according to the Walz method.

9. Filter woven fabric for airbags according to at least one of claims 1 - 7, with an air permeability of 20 - 100 l/dm$^2$·min at 500 Pa test differential pressure, characterised in that the woven fabric comprises at least partially of synthetic filament yarns that are hollow on the inside, that the hollow area fraction is 10 - 40 %, referred to the total cross-section area of the filaments, and that the woven fabric has a woven fabric density of 45 - 68 %, calculated according to the Walz method.

**Revendications**

1. Coussin gonflable de sécurité, constitué d'au moins un tissu de contact et/ou d'au moins un tissu filtrant, dans lequel le tissu de contact présente une perméabilité à l'air < 10 l/dm$^2$·min pour une pression différentielle d'essai de 500 Pa, et le tissu filtrant présente une perméabilité à l'air de 20 à 100 l/dm$^2$·min pour une pression différentielle d'essai de 500 Pa, caractérisé en ce que les tissus de contact et/ou les tissus filtrants sont constitués au moins en partie de fils synthétiques à filaments qui sont creux à l'intérieur, en ce que la proportion de la superficie creuse est de 10 à 40% de la superficie totale de la section transversale des filaments, en ce que les tissus de contact présentent une densité > 72% , calculée par la méthode de Walz, et en ce que les tissus filtrants présentent une densité de 45 à 68%, calculée par la méthode de Walz.

2. Coussin gonflable de sécurité selon la revendication 1, caractérisé en ce que les tissus de contact et/ou les tissus filtrants sont constitués au moins en partie de fils en filaments synthétiques qui sont creux à l'intérieur, en ce que la proportion de la superficie creuse est de 10 à 30% de la superficie totale de la section transversale des filaments, en ce que les tissus de contact présentent une densité > 72%, calculée par la méthode de Walz, et en ce que les tissus filtrants présentent une densité de 45 à 68%, calculée par la méthode de Walz.

3. Coussin gonflable de sécurité selon la revendication 1, caractérisé en ce que les tissus de contact et/ou les tissus filtrants sont constitués au moins en partie de fils en filaments synthétiques qui sont creux à l'intérieur, en ce que la proportion de la superficie creuse est de 10 à 30% de la superficie totale de la section transversale des filaments, en ce que les tissus de contact présentent une densité > 72%, calculée par la méthode de Walz, et en ce que les tissus filtrants présentent une densité de 45 à 68%, calculée par la méthode de Walz.

4. Coussin gonflable de sécurité selon au moins l'une des revendications 1 à 3, caractérisé en ce que les fils à filaments synthétiques présentent un titre de 200 à 1100 dtex.

5. Coussin gonflable de sécurité selon au moins l'une des revendications 1 à 4, caractérisé en ce que le titre des filaments des fils en filaments synthétiques est < 8 dtex.

6. Coussin gonflable de sécurité selon au moins l'une des revendications 1 à 5, caractérisé en ce que les fils en filaments synthétiques présentent une résistance à la rupture > 60 cN/tex et un allongement à la rupture de 10 à 30%.

7. Coussin gonflable de sécurité selon au moins l'une des revendications 1 à 6, caractérisé en ce que les fils en filaments synthétiques sont constitués de polyester, de polyamide 6.6, de polyamide 6, de polyamide 4.6, de polypropylène ou de polyéthylène.

8. Tissu de contact pour coussins gonflables de sécurité selon au moins l'une des revendications 1 à 7, présentant une perméabilité à l'air < 10 l/dm$^2$.min à une pression différentielle d'essai de 500 Pa, caractérisé en ce que le tissu est constitué au moins en partie de fils en filaments synthétiques qui sont creux à l'intérieur, en ce que la proportion de la superficie creuse est de 10 à 40% de la superficie totale de la section transversale des filaments, et en ce que le tissu présente une densité > 72%, calculée par la méthode de Walz.

9. Tissu filtrant pour coussins gonflables de sécurité selon au moins l'une des revendications 1 à 7, présentant une perméabilité à l'air de 20 à 100 l/dm$^2$.min à une pression différentielle d'essai de 500 Pa, caractérisé en ce que le tissu est constitué au moins en partie de fils en filaments synthétiques qui sont creux à l'intérieur, en ce que la proportion de la superficie creuse est de 10 à 40% de la superficie totale de la section transversale des filaments, et en ce que le tissu présente une densité de 45 à 68%, calculée par la méthode de Walz.